# EUROPEAN PATENT APPLICATION

(11) **EP 2 492 833 A1**
(43) Date of publication of application: **29.08.2012**
(21) Application number: 11250227.3
(22) Date of filing: 28.02.2011
(51) Int. Cl.: G06F 21/00

(54) **Method and apparatus for detecting malicious software**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A malware detection device 10 comprises means 121 for identifying a potentially suspicious executable program ; a secure constrained execution environment generator 123; means 125 for causing an executable program identified as a potentially suspicious executable program to be executed within a secure constrained executable environment generated by the secure constrained execution environment generator; and means 127, 129 for examining the executable program as it is stored in the working memory of the secure constrained execution environment at different stages of execution of the program;
wherein the malware detection device 10 is operable to determine that the potentially suspicious program is to be identified as malware in the event that the examining means identifies a change in the executable program as it is stored in the working memory of the secure constrained execution environment, which change corresponds to one or more predetermined suspicious changes.

## Description

### Field of the Invention

The present invention relates to a method and apparatus for detecting malicious software, particularly worms and other executable malicious programs (hereinafter referred to as malware).

### Background to the Invention

Malware has been a well known problem for some time. Most anti-malware software operates on a signature basis where any incoming messages or downloaded files etc. are "scanned" and a comparison is made between the potentially suspect file and a set of known blacklisted malware signatures. If a match is made the potentially suspect file is categorised as actual malware and appropriate action (which may be particular to the identified malware) is taken to remove the malware and make the system safe again.

As a consequence of this signature approach, designers of malware have taken to creating so called polymorphic and metamorphic malware programs which evade signature based detection by changing (or disguising or obfuscating) the file structure of the malware program such that there is no single signature which can match with all of the different possible forms of the malware program. Generally, a malware worm, once it has managed to become installed on a victim's computer device, generates multiple copies of itself and sends these out over the network in the hope of finding other victim computers on which to become installed, before repeating the process.

One way in which designers of malware may achieve obfuscation is to create a so-called polymorphic worm which has many different forms. A typical structure for a polymorphic worm comprises a header portion and an encrypted payload portion; when a worm is running on a victim computer, instead of generating exact replicas of itself for sending over the network, it encrypts the payload portion using a different pseudo random key for performing the encryption each time the worm generates a new "copy" of itself. The header portion stores the key which has been used (in some form - this may be in a somewhat disguised or obfuscated form - e.g. by scrambling, etc.) and is operable to decrypt the payload portion if entire worm (comprising the header portion and an encrypted payload portion) becomes successfully installed onto a new victim's computer. The payload portion contains the majority of the malicious code (including the replication functionality) and so must generally be decrypted by the header portion before the worm can start performing its malicious functions.

Each time the worm generates a replication of itself it looks very different because the majority of the code (the encrypted payload) is (or at least looks) very different for each "copy" (and the header portion is also somewhat different since each "copy" contains a different pseudo random key (which may itself be somewhat obfuscated - e.g. by scrambling)); it is therefore very hard for a signature based approach to detect such polymorphic worms.

When security experts try to examine the behaviour of known or suspected malware, they often do so within a virtualized computer environment. This has the advantage that no damage is done to a real system and although the running malware can request various actions such as opening TCP/IP sockets to remote devices etc and even receive responses indicating that such sockets have indeed been opened, no real actions are taken outside the virtualised environment - furthermore, it is easy for the expert to see what actions the malware is trying to take. When a virtualized computer environment is used in this way it may be referred to as a type of "sandbox" - the term sandbox is generally used to refer to any type of environment in which a program may run but with constraints placed on the actions which it may perform - in other words, a sandbox (in this context) may be considered as a security mechanism which provides a tightly-controlled set of resources which "guest programs" - e.g. known or suspected malware - may use when executing.

### Summary of the Invention

According to a first aspect of the present invention, there is provided a malware detection device comprising:
means for identifying a potentially suspicious executable program;
a secure constrained environment generator;
means for causing a potentially suspicious executable program (as identified by the means for identifying a potentially suspicious executable program) to be executed within a secure constrained environment (as generated by the secure constrained environment generator); and
means for examining the executable program (code instructions) as it is (they are) stored in the working memory (e.g. the instruction or process space) of the secure constrained environment at different stages of execution of the program;
wherein the malware detection device is operable to determine that the potentially suspicious program is to be identified as malware in the event that the examining means (i.e. the means for examining the executable program code instructions) identifies a change in the executable program (code instructions) which corresponds to one or more predetermined suspicious changes.

When an executable program is run it is first "loaded" by the operating system. This may involve several steps including ensuring that any links that it requires to other programs (in order to make API calls - discussed below) and placing the instructions associated with the program into a memory from which the processor can read and duly process the instructions of the program - this memory is referred to in the present application as a working or process memory (in some processor architectures different memory spaces are used for storing program instructions than are used for storing data on which those programs operate (input) and for storing the results of the program instructions (output). The present invention applies equally to processor architectures in which different memories are used as to architectures in which just one single memory address space is used. A key part of linking and loading a program is to include and update an Input Address Table (in Windows operating systems especially). A program file before it is loaded will not include an accurate IAT since this is taken care of by the loader. A set of instructions (and possibly any associated data) when stored in the memory of the processor unit after it has been loaded by the operating system may be thought of as forming a program image in the memory and this may change during execution of the memory, especially in the case of malware which is trying to obfuscate its malicious behaviour to avoid detection by signature based anti-virus detection systems.

The device of the first aspect of the present invention as set out above, may further include a means for ascertaining operating system Application Programming Interface calls when they are made by the potentially suspicious executable program during its execution within the secure constrained environment. Alternatively, the examining means may be operable to detect the presence of instructions for such calls to be made by the program regardless of whether or not the instructions are actually (virtually) executed or not. Determining that a potentially suspicious executable program should be identified as malware may additionally involve looking for suspicious API call patterns (i.e. API call patterns predetermined as being potentially malicious).

Note that the means for identifying a potentially suspicious executable program can operate in a number of ways. For example, it can look for new executable files as and when a new file is stored on the system (either by keeping a record of all known executable files and periodically scanning through the system to look for new files - i.e. ones which don't appear in the record) or it can examine every newly saved file to see if it is an executable file (or a combination of both of these approaches). Alternatively it can look for attempts to start an executable program/application/file. This generally involves making a call to the operating system's API and so this call can be intercepted and used as the trigger for the means for identifying a potentially suspicious executable program. In this case it can again keep a record of known programs and identify the application as potentially suspicious if it does not appear in its record of known applications (or if it does not appear in its current form because it has been amended in some way since it was last run). It is also possible to use a combination of these two different types of approach - i.e. looking for newly stored files and looking for attempts to start an executable program running. All of these techniques are well known in the field of anti-virus software and can be used in the present system without significant modification.

The secure constrained environment generator is operable to provide a kind of sandbox environment in which a program may be "executed" such that it appears from the perspective of the program that it is running directly under the main operating system running on the device whereas in fact it is "running" only indirectly and all external actions are performed merely virtually such that it "appears" to the program as though they have been carried out in the way that would be expected, whereas in fact they have not been actually carried out. Such a sandbox environment can be created using virtualisation techniques, either by creating a complete virtualised computer (e.g. using the well known VMware tools for this purpose) or by creating a tailored "sandbox" which is suitable for the purpose of identifying malicious software according to the present invention but which does not include the full set of features provided by a virtualised computer tool such as provided by VMware and other companies providing similar tools.

The means for causing a potentially suspicious executable program (as identified by the means for identifying a potentially suspicious executable program) to be executed within a secure constrained environment (as generated by the secure constrained environment generator) is preferably implemented by means of a small program (which may be a continually running program such as a "service" or a "daemon") which is invoked when an event (e.g. a new file is saved on the hard drive/file-system of the device, or a file thereon is renamed or modified etc.) occurs for which the program is a registered listener or by using a "hook" provided by the operating system such that, for example, an API call to the operating system (e.g. to run an executable file) is intercepted and the target file (to be run) is passed instead to the program which then causes it to be run not directly by the operating system but instead within the secure constrained environment.

The means for examining the executable program code instructions as they are stored in the working memory (e.g. the instruction space) of the secure constrained environment at different stages of execution of the program is preferably implemented by means of a tool (which may also conveniently run within the secure constrained environment) for examining the contents of the memory at any given/specified point in time (or point in the execution of the potentially suspicious program) and outputting this to an output file, together with an analysis program which examines the contents of the output file(s) and looks for patterns therein which may be indicative of suspicious behaviour by (or changes in the structure of) the potentially suspicious program as discussed below in order to identify a change in the program as it appears in the working memory which corresponds to one or more predetermined suspicious changes. An example of a tool which can be used to obtain the contents of the memory of a processor (or a virtual processor in the case of a virtualised environment) is the program Memoryze provided by the IT security consultancy company Mandiant. Preferably, the analysis program is a simple program which simply looks for predetermined simple patterns in the output file contents in a manner discussed in greater detail below. However, any suitable type of analysis program could be used for this purpose, such as, for example, an artificial neural network, or some other pattern detection software such as a support vector classifier, etc.

In terms of the type of patterns which the analysis program tries to detect in the changes of the contents of the potentially suspicious program whilst it is being run in the secure constrained environment (i.e. a change in the executable program code instructions which corresponds to one or more predetermined suspicious changes), the type of change which can be deemed to be suspicious is a change in the number of executable portions in the program. As mentioned above, one common "trick" employed by polymorphous worms is to be comprised of a header portion and an encrypted payload portion. The header portion is merely operable to decrypt the payload portion and then to invoke the decrypted payload portion. In this case, the decrypted payload portion typically takes the form of an executable portion or a separate program altogether. In either case, the memory contents will include an additional "magic number" (e.g. MZ or ZM for Windows based malware) compared to the case before the decryption occurred (see Wikipedia's entry for "magic number" for a discussion of magic numbers in general). Thus a change in the number of magic numbers present in the memory contents is preferably included as one predetermined suspicious change.

The invention is most conveniently implemented using software running on a general purpose computer. Therefore, according to a second aspect of the invention, there is provided a computer device programmed to:
identify a potentially suspicious executable program;
generate a secure constrained environment;
execute a potentially suspicious executable program within the generated secure constrained environment; and
examine the executable program code instructions as they are stored in the working memory (which may be virtual memory) of the secure constrained environment at different stages of execution of the program;
wherein the programmed device is operable to determine that the potentially suspicious program is to be identified as malware in the event that the examination of the executable program code instructions identifies a change in the executable program code instructions which corresponds to one or more predetermined suspicious changes.

According to a third aspect of the present invention, there is provided a method of detecting malware on a general purpose computer device, the method comprising:
identifying a potentially suspicious executable program;
generating a secure constrained environment;
executing a potentially suspicious executable program within the generated secure constrained environment; and
examining the executable program code instructions as they are stored in the working memory (which may be virtual memory) of the secure constrained environment at different stages of execution of the program;
wherein the device is operable to determine that the potentially suspicious program is to be identified as malware in the event that the examination of the executable program code instructions identifies a change in the executable program code instructions which corresponds to one or more predetermined suspicious changes.

Further aspects of the present invention relate to one or more computer programs for carrying out the method of the third aspect of the present invention, and to non-transient storage media (e.g. a magnetic or optical storage disk such as a hard drive or a CD ROM or DVD, or a solid state memory device such as a usb thumb-drive, etc.) storing such a program or programs.

### Brief Description of the Drawings

In order that the present invention may be better understood, embodiments thereof will now be described, by way of example only, with reference to the accompanying drawings in which:
Figure 1 is a schematic block diagram of a general purpose computer programmed to operate in accordance with an embodiment of the present invention;
Figure 2 is a flow chart illustrating the steps carried out by the device of Figure 1 when operating a method in accordance with an embodiment of the present invention;
Figure 3a is a schematic illustration of the execution of a malicious polymorphic worm in a virtualized computer execution environment running within the computer of Figure 1; and
Figure 3b is an alternative schematic illustration of the execution of a malicious polymorphic worm in a virtualized computer execution environment running within the computer of Figure 1.

### Detailed Description of a First Embodiment

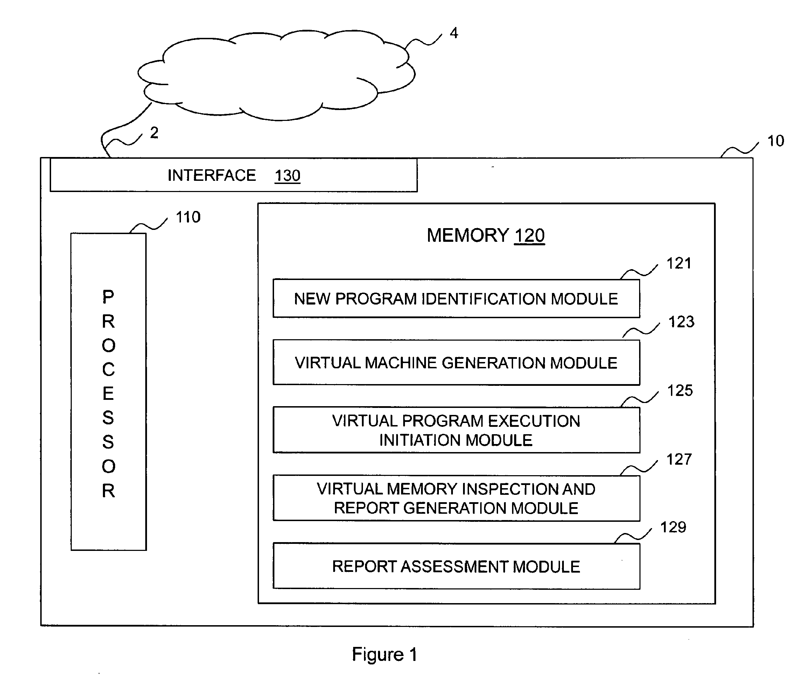

Figure 1 illustrates a computer device 10 programmed to include a malware detection function. As schematically illustrated, the device 10 includes a processor unit 110 a memory 120 and an interface 130. Naturally, many of the standard components of a computer device have been left out of the drawing (and omitted from the present discussion) since they are well known and not pertinent to the present invention. Furthermore, the illustration is also deliberately vague about the nature of the memory 120 since it does not affect the present embodiment whether the memory employed is dynamic RAM, hard disk storage or some other form of memory, etc. It can also be seen from Figure 1 that the device 10 is connected via its interface 130 and a connection 2 (e.g. an Ethernet connection) to an external network 4 (which could for example include a Local Area Network (LAN) and a Wide Area Network (WAN) such as the Internet). By means of this connection to an external network 4 the computer device 10 is at risk of being "infected" by malware computer programs. As is well known in the art, such programs can be surreptitiously installed onto the device 10 in a number of ways, such as, for example, by being included in a malicious program which appears to perform a useful function and is therefore voluntarily downloaded from the network 4 and installed onto the computer device by the user, or by some malicious code operating at a web site which causes the user's web browser program to malfunction and inadvertently download the malicious software, etc.

The memory 120 stores a number of functional modules of software code which, when executed by the processor unit, cause the device 10 to perform the various functions described below which together operate in combination to enable malware to be detected on the device 10. Naturally, the memory may additionally store many other pieces of software and user data etc. such as an operating system and various user applications such as an email client application (and associated email address data belonging to the user of the device 10) and a web browser, etc. but these are not directly pertinent to the present embodiment and so have been omitted from Figure 1 for the sake of clarity.

In terms of the software modules contained in the memory 120 that are directly pertinent to the malware detection function of device 10, the memory includes the following functional modules:
New Program Identification Module 121 - this is responsible for identifying "new" programs. In the present embodiment it operates to identify both new files that are stored in a memory of the device 10 and to identify any files whose content changes. In addition, in the present embodiment, it also detects, if a request is made to the device's operating system to begin execution of a program, whether that program is one which it knows about and which it considers to be safe (i.e. is one which is stored on a "white list" of known safe programs) and which has not been modified since its last time of usage. Generally, in order for a program to be executed by the operating system it needs to be stored on the operating system and so, in general, programs which are not on the white list should be identified prior to a request for it to be executed being submitted to the operating system but having the second stage of examining programs as a request for them to be executed is passed to the operating system acts as a back up in case the first stage of looking for new or modified executable files fails. Note that in general this module 121 is only interested in executable programs which, in the present embodiment, are identified by the inclusion of the "magic number" MZ continued in the file comprising the program. Nonetheless, in other alternative embodiments other types of program could be identified - for example scripts (e.g. JavaScript programs) and other programs, and files which are executable on alternative operating systems to the Windows based operating systems to which the magic number MZ is specific, etc.

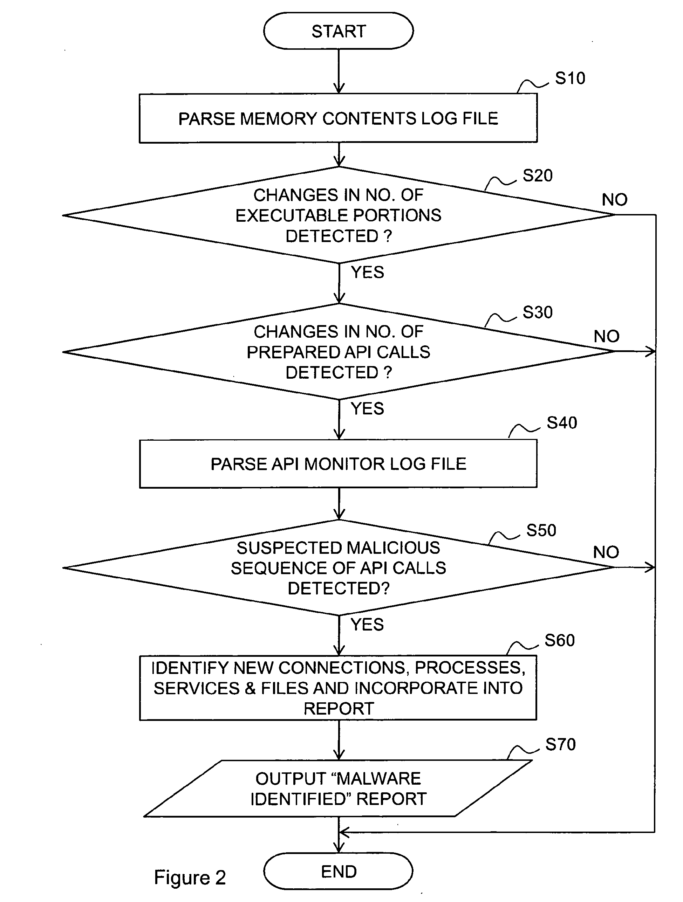

As well as identifying candidate files on which to perform more detailed analysis, the New Program Identification Module 121 is also responsible for overseeing the entire detection process (as set out more fully below with reference to Figure 2) by coordinating the sub-processes carried out by the remaining modules discussed below.

Virtual Machine Generation Module 123 - this is responsible for generating a secure constrained environment in which to run (i.e. execute) any new (and therefore potentially suspicious) programs (hereinafter referred to as target programs) identified by the New Program Identification Module 121. In the present embodiment, it is a standard application provided by an external producer of virtualization applications - in particular, in the present embodiment, the well known VMware Player 3.0 application produced by VMware is used. In line with general terminology in the virtualization field, henceforth the operating system of the computer deivce 10 will be referred to as the host operating system and the operating system running in the virtual machine will be referred to as the guest operating system.

Virtual Program Execution Initiation Module 125 - this is responsible for passing the target program to the secure constrained environment (in this case the guest operating system running on the virtual machine) generated by the Virtual Machine Generation Module 123 for controlled execution by the guest operating system in the virtual machine, together with any additional programs which need to be run together with the target program. In the present embodiment, the virtual program execution initiation module 125 takes the form of a first script (e.g. a Perl script for interpretation by a Perl interpreter or a similar type of script which is specific to the virtualization application - or other secure constrained execution environment if something other than virtualization software is being used) which interacts with an Application Programmers Interface (API) function (running under the host operating system) provided by software (e.g. vmrun) associated with the virtualization application (e.g. VMware Player 3.0). As well as passing the target program to the virtual machine (i.e. to the guest operating system), the virtual program execution initiation module 125 also provides a memory inspection program (in the present case this is the application "Memoryze" provided by Mandiant) and, in the present embodiment, an API monitor program (e.g. the well known "API Monitor" program produced by www.APIMonitor.com) together with a program (a second script in fact - e.g. another Perl script) which also runs within the virtual machine and causes the output of memory inspection and API monitoring programs to be logged into a file during execution of the target program. The API monitoring program detects the API calls made by the target file during its execution within the secure constrained environment; the script which is executed in the guest operating system causes the output from the memory inspection and API monitoring programs to be logged and stored in a file can either store the output in a single common file or into separate files. Finally, prior to closing down the virtual machine, the Virtual Program Execution Initiation Module 125 extracts the log file (or files) containing the output from the memory inspection program and the output from the API monitoring program and copies it (or them) across to a data store accessible to the host operating system; after doing this successfully it then closes down the virtual machine. Additionally, the Virtual Program Execution Initiation Module 125 could also send additional programs to the execution environment in order to monitor the behaviour of the target program such as, for example, a process monitoring tool, a network activity monitoring tool, etc.

Virtual Memory Inspection and Report Generation Module 127 - in the present embodiment, this comprises the memory inspection program, API monitoring program and the associated second script referred to above (together with any additional monitoring programs, etc.), which are all passed to the guest operating system by the first script mentioned above (i.e. by the virtual program execution initiation module 125). As will be appreciated by persons skilled in the art, such memory inspection and API monitoring could alternatively be performed outside the secure constrained execution environment (e.g. in the host operating system when virtualization techniques are used) but it is relatively simple to perform such activities from within the secure constrained environment itself, when this is a virtual machine generated using virtualization software such as VMware's, as is done in the present embodiment. Instead of using virtualization techniques, emulation techniques could be used instead. For example the well known Windows emulation project WINE could be used within a Unix or Linux based operating system. In such a case it would normally be more appropriate to perform memory and API monitoring (together with any other additional monitoring) outside of WINE within the Unix or Linux based operating system.

Report Assessment Module 129 - the final module, which is pertinent to the present embodiment and is illustrated in Figure 1, is responsible for parsing the contents of the log files generated by the virtual memory inspection and report generation module 127 in order to make a determination of whether or not the target file should be considered suspicious. The logs produced by the virtual memory inspection and report generation module 127 even in the present embodiment are quite extensive and in alternative future embodiments could be even more so. It is therefore possible to consider that very complex analysis algorithms could be used for performing the parsing and analysis. However, in the present embodiment only fairly basic strategies are employed which are relatively easy to implement (again with a Perl - or similar - script) but which effectively distinguish in most cases between malicious programs and non-malicious ones. The exact strategies used by this module are explained in greater detail below with reference to Figure 2, but basically the assessment module 129 looks to see if the number of executable portions in the target file has changed at all during the execution of the target file (since this is indicative of a program having a head portion and an encrypted executable tail or payload portion which is a strategy commonly employed by polymorphous worms as mentioned above but which is uncommon in non-malicious programs). Additionally, it looks to see if the entries to a data construct known as the Input Address Table (IAT) (which is discussed in greater detail below) have changed (as this is indicative of a change in the API calls which the target program is designed to make - which in turn is indicative of some previously obscured (e.g. encrypted) executable code having been unhidden and loaded into memory for execution, which is the sort of behaviour typical of malicious code rather than legitimate code). Finally, it examines the sequence of API calls made by the target program to look for known sequences considered to be indicative of the behaviour of malicious programs. Based on the above assessments, the report assessment module makes a determination as to whether or not the target program is a malicious program or not. If it is determined that the target program is a malicious program, it additionally identifies any new connections, processes, services and/or files that the program has created (or attempted to create) during its execution; this information is then used to form part of a report which can be automatically provided to an administrator or user of the device about the target program and its designation as being malicious.

Detection Process - Before explaining the detection process employed by the system as illustrated in Figure 1, and in particular, the operation of the report assessment module 129, in greater detail below with reference to Figure 2, an overview of the detection process and a brief discussion of the nature of polymorphous malware programs and of the IAT structure is set out immediately below.

The detection is based on observing the difference between the behaviour of the code before, during and after execution. The inventors have determined that relying solely on monitoring API calls (as has been proposed by several other workers in this field) is not sufficient to reliably determine whether a given target program/process is malicious or legitimate, in particular, such a prior art approach suffers from a high rate of false positive detections/determinations. So in order to minimize the false positive detection rate, detection in the present embodiment involves monitoring the target file's structural changes (e.g. change in the number of executable portions stored in the computer's process memory, etc.) in addition to monitoring the sequence of API calls made by the target program and the types of API call which the target program is set up to be able to make (as recorded in the IAT (see below) of the target program when stored in memory), in order to detect malicious activities.

By monitoring of a high number of malware infections and how they infect a computer system, it has been observed that many pieces of malware consist of multiple parts, namely a "stub" part, a "splitter" part and a "payload" part (which contains actual malicious code) as shown in Table 1 below.

The stub is the part that is used to encrypt and decrypt the malicious code. The stub is the main element that can be used to make the malware undetectable by the anti virus or intrusion detection systems by using different encryption and polymorphic techniques. The stub has its own file header structure and API calls that are used for obfuscating (and de-obfuscating) the main malware code contained in the payload portion. The Stub API calls are mainly for encrypting/decrypting the malware code and interacting with the system memory.

The Splitter is used by the malware authors to split the Stub part from the Malware code. The present inventors have observed that the Splitter portion does not normally include any API calls and is not designated as an executable portion; in other words it is not meant to run in the system and therefore it does not have a specific file structure. Sometimes malware authors include the password for encrypting/decrypting the payload portion in a hard coded form in the splitter section. The main element in the splitter portion is a random dummy string the length of which is known by the Stub portion such that the Stub portion knows the beginning and ending of the malware code (i.e. the payload portion) and also therefore knows the main entry point of the malware.

The malware part is the actual malicious code that infects the victim system; it is responsible for causing malicious activities within the victim system (e.g. connecting to a remote mothership server over the Internet and downloading a more sophisticated malware application for example) and co-operates with the stub portion to enable the worm to propagate (i.e. to generate a "copies" of itself and to try to send these "copies" to other victim systems). This payload part is meant to run at the victim system and so it has its own file header structure and API calls. The API calls in the malware code may vary considerably from one piece of malware to another and depend on the intended purpose of the malware in question, but typical important aims of malware programs such as polymorphic worms are: to spawn/create one or more new processes; to open an internet connection; and to change the system registries so that the malicious process(es) can stay running at the operating system. Normally, the malware part is obfuscated to evade detection.

**Table 1: Malware Obfuscation**

| |
|---|
| Stub |
| Encryption/Decryption Algorithm |
| API calls |
| File Header |
| Splitter |
| Password |
| Random Dummy String |
| Payload |
| Malicious code |
| API calls |
| File Header |

The Input Address Table (IAT) is a part of an executable program when it is stored in the memory (the process memory) of a computer. The IAT contains information about the computer's operating systems's Application Programmer's Interface (API) calls. These are essentially calls to other programs (generally ones which form a part of the operating system). In order to make such a call, the IAT specifies a memory location at which that called program can be found. Since this is not known to the calling executable program in advance of the executable program being loaded into the memory of the operating system, the IAT is "filled in" by a program called a "linker" program which is responsible for loading the executable program into memory. Thus the IAT provides a listing of the API calls which the program in question is planning on making, or at least which it is potentially prepared to make (if the relevant circumstances for making such a call occur during execution of the program). Thus by examining the contents of the IAT (e.g. using the Memoryze application) it is possible to see what API calls the target program is preparing to be able to make. If the total set of API calls which one or more programs are preparing to make changes during the execution of a program it is indicative of additional executable code having been loaded into the computer (whether it be the result of a new program having been loaded or modifications to an already loaded program by requesting that new executable code be loaded and linked to existing code in the process memory etc.) and this is detectable by monitoring the content of (all of) the IAT(s) resident in the memory.

Having thus considered the typical behaviour of the sort of malware which the present embodiment is intended to detect, and having given an overview of the IAT, there is now described in overview the method of the present embodiment by which such behaviour is safely detected such that the malware in question can be prevented from carrying out malicious behaviour.

Thus the method performed by the present embodiment is now described with reference to Figure 2. It commences (S10) with the Report Assessment Module 129 parsing the memory contents log file produced (in the present embodiment) by the Memoryze application (in cooperation with the second script referred to above).

In the present embodiment, the first thing which is looked for (at S20 - **Monitor the file header structure changes**) is a change in the file header structure of the target program as stored in memory, in particular for a change in the number of executable portions detected, for example, as in the present embodiment, by looking for occurrences of the magic number MZ. Note a piece of malware such as a polymorphic worm is typically based on several parts, as discussed above, including a Stub portion and a Payload portion which contains the actual malicious code; normally, any program designed to run under a Windows/Microsoft operating system will have only one magic number 'MZ' in the file header in order to run the file. The Magic number 'MZ' is very important in order to make Windows OS run the program. However, in the case of malware programs the file header is typically split into several parts each of which includes an 'MZ' magic number in order that it is run by the operating system. The present inventors have determined that in such cases, the target file before execution may have only one instance of the Magic Number 'MZ' , while after execution a second occurrence of the magic Number 'MZ' appears in the file header. The reason there are two 'MZ's is so that one causes the operating system to run the Stub and the other causes the actual malware code contained within the payload portion to be run by the operating system. The reason that prior to execution of the target program there is only one 'MZ' is that the other 'MZ' instance is encrypted and cannot therefore be "seen" (by the Memoryze application in the present embodiment - although alternative memory inspection tools may of course be used - indeed to ascertain that there is only one detectable "MZ" before execution it is possible to simply examine the target file whilst it is stored on some memory device as a file without having to examine its contents when stored in the computer system's process memory at all), however once the Stub portion has been executed and has therefore decrypted the malware code, the other 'MZ' appears and can be detected (by examining the contents of the program as stored in the process memory of the system - note that at this stage the copy of the program stored as a file in the files system of the computer system - e.g. on a hard drive - may still have only the one MZ since the copy of the program stored as a file may not have been amended - i.e. it might still contain the MZ in encrypted format). Thus, the detection mechanism of the present embodiment (by looking for changes in the file structure of the program when it is stored in the computer system's process memory) detects such suspicious behaviour.

If, therefore, the Report Assessment Module 129 detects at S20 that no change in the number of executable portions within the target program (or within the process memory as a whole including new unencrypted or otherwise de-obfuscated programs or program portions which the target program has caused to be loaded into the system) has been detected, then the method ends with the assumption (in the present embodiment) that the target program is not malicious.

On the other hand, if such a change is detected at S20, then the method proceeds to determine (at S30) if there has been a change in the prepared API calls - e.g. by looking to see if the sum total of API calls for which (one or more) IAT's have had entries filled - or altered - has changed during the execution of the target program.

At this point in the process, since it seems likely at this stage that the target program is one which includes a previously obfuscated second portion such as a payload portion of a malicious polymorphic worm (because of a positive determination at decision point S20), it is likely that each part has its own API calls. Because of the obfuscation, for example by having a payload portion which is initially encrypted which is a typical malware approach to evading detection, then some or part of the API calls will be visible in the file header structure (at least initially) while the other API calls or parts thereof will not be visible (either initially or throughout in the file copy of the program as stored in the computer systems file system e.g. on a hard drive. Therefore, during process monitoring, detected changes in the API calls before and after running the process is an indication that some or part of the API calls were initially encrypted. Normally, the encrypted API calls will belong to the malicious code.

By detecting changes in the prepared API calls rather than just considering the actual API calls made by the malware (as is done in some prior art approaches) even if a malware author attempts to obfuscate the malicious API calls (e.g. by containing them within an encrypted payload portion that is only decrypted in the process memory of the computer system after execution of the malware has begun) the present embodiment is still able to detect changes to the API calls. In the initial stages of the execution of the target program most API calls will be from the Stub (and will therefore correspond to "expected" API calls in the sense that an initial analysis of the target program - e.g. in its form when stored as a file in the file system of the computer system (e.g. on a hard drive) - would have noticed that the program was expecting to make such calls during its execution and such calls would not generally be considered as suspicious calls). However, once the Payload part starts to execute then the contents of the IAT table associated with the target program may well change and "unexpected" API calls may be initiated. By monitoring the changes in the IAT table during execution or by detecting "unexpected" or new API calls made by the target program during its execution, the present embodiment can infer that it is likely that some or part of the API calls have been obfuscated.

If no changes are detected in the prepared or expected API calls, (i.e. if there have been no changes either in the total number of API calls entered in the IAT(s) and there have been no changes in the entries to the IAT(s) - e.g. by a process overwriting pre-existing addresses in the IAT entries with new addresses) then, in the present embodiment, the method terminates (with the assumption that the target program is probably not malicious).

Otherwise (i.e. if at S30 a change in the number of prepared API calls associated with the target program (or new programs loaded as a result of the execution of the target program) is detected or if some other change is detected in the IAT(s)'s entries), then the method proceeds to parse the API call monitoring program's log file (in the present embodiment) at S40 - Parse API Monitor log file.

Typically, a piece of malware such as a polymorphic worm tries to gain control over the victim machine once its execution has commenced and attempts to allow a remote attacker to have access to the system resources. Therefore, once the malware has "infected" the victim computer system it may try to do any one or more of the following: create one or more new processes, create new files, open a connection over a network (e.g. the Internet) to an attacker (e.g. a mothership malicious web server). In order for the malware to perform these actions it generally has to use the operating system's API to interact with the victim computer system. Thus, if a sequence of API calls such as calling the URLDOWNLOADTOFILE API followed by the ShellExecute API call is noticed in the API monitor log, it is considered as an indication that the target program is indeed malicious since it is basically indicative of the malicious code trying to connect to a specified URL to download and then execute an unknown executable program. Similarly, a series of API calls such as CryptoAPI (an API that is used to create an object for encrypting and decrypting) followed by Send() or recv() API calls (API calls for sending and receiving data across the network respectively) then that would be detected by the present embodiment as an example of a suspicious sequence of API calls.

If at S50 a suspicious sequence of API calls is not detected, then, in the present embodiment the method ends with the assumption that the target program is not malicious. Otherwise, i.e. if a suspected malicious sequence opf API calls is detected in the analysis of the API Monitor program log file, then the method proceeds to execute steps S60 and S70 (which are concerned with generating a possible malware report). Note that the present embodiment is rather cautious in its determination of the target program as being (possibly, or perhaps more accurately, probably) malicious. This is because a significant problem with prior art approaches has been that they produce too many false positive results. However, in alternative embodiments of the present invention, the approach could be less cautious and a single positive determination, or perhaps two out of three positive determinations at any of the decision points (e.g. S20, S30 and S50) could be sufficient to trigger the generation of a possible malware report.

At S60, a possible malware identified report is generated. This includes data about the positive decisions made at S20, S30 and S50 as well as information about all new connections processes files and services which the target program tried to create (although since it is being run in a secure constrained environment such things should not actually have been generated at all).

The method then proceeds to the final step in which the report thus generated is output to a user of the computer system (e.g. as a log file) and the process ends (without executing the target program).

If the process has ended without going through S60 and S70, then the target program is considered to be safe. Nonetheless, before simply executing the program, a message is presented to the user explaining that the process has been checked and is believed to be safe and the user is asked to confirm that the program should now be run before it is executed.

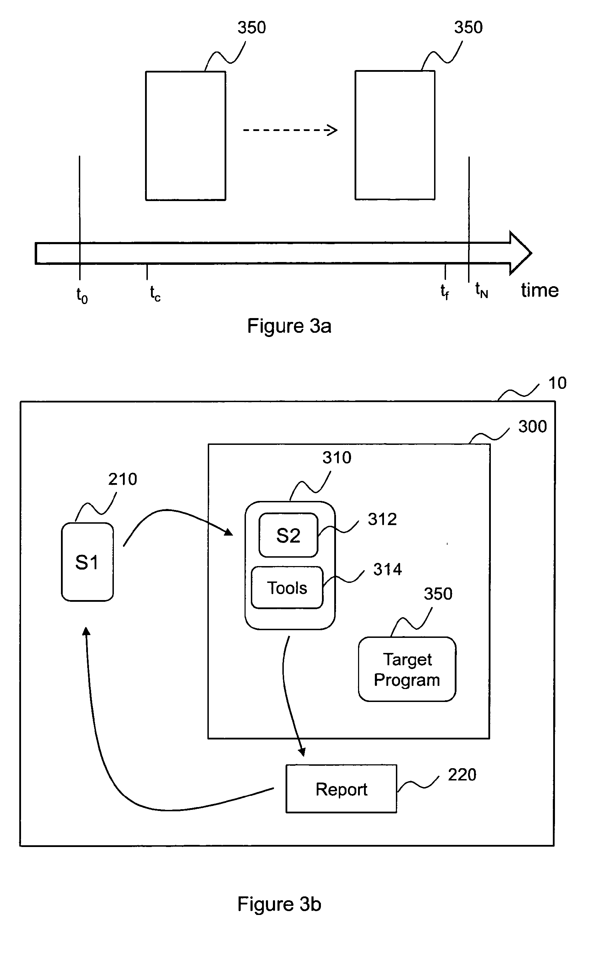

Turning now to Figure 3, there will now briefly be explained the full process by which a target program is analysed by the present embodiment. As shown in Figure 3a, at some point in time to the secure constrained execution environment (in this case a virtual computer, in particular a guest operating system) is initiated and the required programs are initiated in the secure environment. By a time t_{c} the target program 350 has been loaded into the working memory of the guest operating system. It is allowed to run in the secure constrained execution environment and is monitored until some predetermined time t_{f} at which point tools running in the secure constrained execution environment prepare a report about the running of the target program 350 between times t_{c} and t_{f}. At a time t_{N} the secure constrained execution environment is shut down after allowing sufficient time for the report to be finalised and saved at a location accessible to a program (script 1 referred to below) running in the host operating system.

Referring now to Figure 3b, the computer system is illustrated as containing a host operating system 200 within which a first script, S1, 210 is running. When a new target file to be analysed is detected, the first script S1 initiates the secure execution environment (in this case guest operating system 300 generated using the VMware virutalization products) at a time to (see Figure 3a), and passes to it a collection of utilities 310 to be run within the secure constrained execution environment 300 including a second script, S2, 312 and a set of tools 314 including, in the present embodiment, a memory contents viewing application, Memoryze, and an API call monitor program, APIMonitor. Once the passed utilities 310 are up and running within the secure constrained execution environment, the target program 350 is run (at time t_{c} - see Figure 3a) within the secure constrained execution environment 300. In the present embodiment this is done by the second script S2 accessing the stored file containing the target program as stored on a part of the file system of the computer which is accessible to the guest operating system, the target file having been previously stored there by the first script S1 prior to initiating the secure execution environment, and causing it to be loaded into the virtual process memory associated with the secure constrained execution environment 300. Once it is loaded it appears within the memory of the secure constrained execution environment 300 as a portion of the memory 350 which can be accessed, read and generally monitored by the memory contents reading application, Memoryze. Between times t_{c} and t_{f} the behaviour of the target program 350 and in particular, the contents of the virtual working memory in which the target program 350 resides is monitored and the results of the monitoring are incorporated into a report. Once the monitoring period (from t_{c to t}f) is completed, the report(s) 220 of the tools loaded into the secure constrained execution environment is (are) finalized and stored within the computer system's file system at a location which is accessible to both the guest operating system and the host operating system. Once the report(s) have been finalised and safely stored for future reference, the host operating system 300 is closed down by the first script S1 (in the present embodiment) and then it proceeds to perform an analysis of the report(s) as described in greater detail above.

### Variations

It will be appreciated that there are many different ways in which the present invention may be embodied. In particular, the particular tools which have been described above as being used in embodiments described above, although presently preferred are not essential and alternative ways of implementing th the invention will occur to persons skilled in the art. Thus, for example, there will occur to persons skilled in the art many different ways in which to generate a secure constrained execution environment other than using a virtual operating system. For example, an emulator approach could be used (e.g. WINE on Unix/Linux). Similarly, the important feature of monitoring the behaviour of a target file by examining its form in the memory can be implemented either by using a memory monitoring application such as Memoryze as is done in above described embodiments or alternative techniques could be used such as obtaining snapshots of the entire memory contents of a guest operating system when using such a technique to generate the constrained secure execution environment. Alternatively, an application such as Memoryze could be executed from within a host operating system and used to examine the memory contents of the actual memory a part of which will contain the memory contents of the virtual memory being used by the guest operating system, etc. Tracking the behaviour of the target program as it appears within the working or process memory of a computer system's operating system (whether it be an actual or a virtual operating system) can establish key information about the program which is not readily available from an analysis of the program in its form when it is stored as a file within a computer system's file system.

The previous steps of detecting malware behaviour can consolidate any other detection system. For example, if an intrusion detection system is using signature analysis or any of the previous mentioned known malware detection techniques techniques to detect malware, then embodiments of our invention can be formed by incorporating monitoring of the behaviour of the program as it appears within the working memory into such detection systems. Such an embodiment will then still be able to detect malware even if the malware includes encrypted API calls or a completely encrypted worm body/payload portion in order to evade detection.

Using this technique of detection can improve security standards by protecting setworks and individual computer devices from being infected with new types of malware that perform polymorphism which is only readily detectable at the memory level.

By monitoring the appearance of a target program within the process or working memory of a computer (or within a virtual operating system or other type of secure constrained execution environment) malware in which malicious activites are performed and are visble only based on an analysis of the target program as it appears within the working memory can be detected. Some types of malware exhibit this behaviour appearing almost totally at the memory level, especially malware where malware polymorphism happens at the memory.

The particular approaches for identifying suspicious features in the behaviour of the target program can of course be modified in alternative embodiments. For example, instead of looking for predetermined fixed patterns in the reports of the programs behaviour, an automatic classifier such as a neural network or a support vector classifier, etc. Additionally, the use of reports could be omitted as well with such a classifier having direct access to the memory contents instead, etc.

## Claims

1. A malware detection device comprising:
means for identifying a potentially suspicious executable program;
a secure constrained execution environment generator;
means for causing an executable program identified as a potentially suspicious executable program to be executed within a secure constrained executable environment generated by the secure constrained execution environment generator; and
means for examining the executable program as it is stored in the working memory of the secure constrained execution environment at different stages of execution of the program;
wherein the malware detection device is operable to determine that the potentially suspicious program is to be identified as malware in the event that the examining means identifies a change in the executable program as it is stored in the working memory of the secure constrained execution environment, which change corresponds to one or more predetermined suspicious changes.

2. A device according to claim 1 further comprising means for ascertaining operating system Application Programming Interface calls when they are made by the executable program during its execution within the secure constrained environment.

3. A device according to either one of the preceding claims wherein one of said one or more predetermined suspicious changes comprises a change in the number of executable portions of the executable program as it is stored in the working memory of the secure constrained execution environment.

4. A computer device programmed to:
identify a potentially suspicious executable program;
generate a secure constrained environment;
execute a potentially suspicious executable program within the generated secure constrained environment; and
examine the executable program as it is stored in the working memory of the secure constrained environment at different stages of execution of the program;
wherein the programmed device is operable to determine that the potentially suspicious program is to be identified as malware in the event that the examination of the executable program identifies a change in the executable program which corresponds to one or more predetermined suspicious changes.

5. A method of detecting malware on a general purpose computer device, the method comprising:
identifying a potentially suspicious executable program;
generating a secure constrained execution environment;
loading and executing a potentially suspicious executable program within the generated secure constrained execution environment; and
examining the executable program as it is stored in memory within the secure constrained execution environment at different stages of execution of the program after loading of the program;
wherein the device is operable to determine that the potentially suspicious program is to be identified as malware in the event that the examination of the executable program identifies a change in the executable program as it is stored in memory after loading of the program, which corresponds to one or more predetermined suspicious changes.
